# EUROPEAN PATENT APPLICATION

(11) **EP 2 442 050 A1**
(43) Date of publication of application: **18.04.2012**
(21) Application number: 10785875.5
(22) Date of filing: 25.03.2010
(51) Int. Cl.: F25B 1/00, F25B 11/02

(54) **REFRIGERATION CYCLE DEVICE**

(30) Priority: 12.06.2009 JP 2009140820
(71) Applicant: Panasonic Corporation, Kadoma-shi Osaka 571-8501 (JP)
(72) Inventor: YAKUMURA, Yuichi, Osaka-shi, Osaka 540-6207 (JP)
(74) Representative: Fritsche, Rainer
(86) International application number: PCT/JP2010/002137
(87) International publication number: WO 2010/143343

(57) **Abstract**

A refrigeration cycle apparatus (100A) is provided with: a first compressor (1) including a first compression mechanism (11), an expansion mechanism (13), and a first motor (12); a second compressor (2) including a second compression mechanism (21), and a second motor (22); and a control device (6). The control device (6) reduces a rotation frequency of the second motor (22) at a reduction speed greater than a rotation frequency of the first motor (12) in a stop operation for stopping the first motor (12) and the second motor (22) while reducing the rotation frequencies of the first motor (12) and the second motor (12).

## Description

### TECHNICAL FIELD

The present invention relates to a refrigeration cycle apparatus that is used for water heaters, air conditioners, and the like, and that is equipped with an expansion mechanism and compression mechanisms thereon.

### BACKGROUND ART

Recently, a power recovery-type refrigeration cycle apparatus that uses an expansion mechanism instead of an expansion valve has been proposed for further enhancing the efficiency of the refrigeration cycle apparatus. In this apparatus, the expansion mechanism recovers, as power, the pressure energy produced in the process where a refrigerant (working fluid) expands, so that the electric power required to drive a compression mechanism should be reduced by the recovered amount. Such a refrigeration cycle apparatus uses an expander-compressor unit in which a motor, a compression mechanism, and an expansion mechanism are coupled to each other by a shaft.

In the expander-compressor unit, the compression mechanism and the expansion mechanism are coupled to each other by the shaft. Therefore, there are cases where the displacement of the compression mechanism is insufficient, or the displacement of the expansion mechanism is insufficient, under certain operational conditions. In response to this, there also has been proposed a refrigeration cycle apparatus that uses a second compressor, in addition to the expander-compressor unit, in order to keep the COP (Coefficient of Performance) of the refrigeration cycle apparatus high by ensuring the recovery of power even under such operational conditions (see Patent Literature 1, for example).

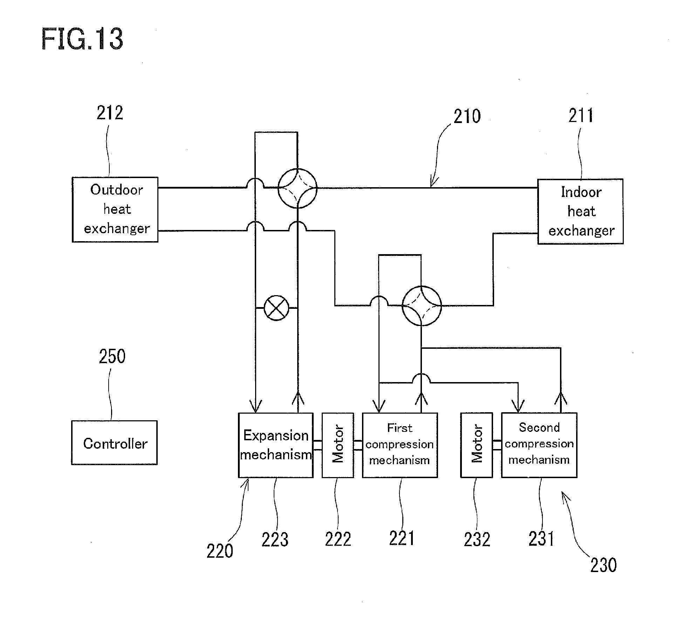

Fig. 13 is a diagram showing the configuration of the refrigeration cycle apparatus described in Patent Literature 1. As shown in Fig. 13, the refrigeration cycle apparatus using an expander-compressor unit 220 and a second compressor 230 is provided with a refrigerant circuit 210 and a controller 250 that serves as a control device. A first compression mechanism 221 of the expander-compressor unit 220 and a second compression mechanism 231 of the second compressor 230 are arranged in parallel between an indoor heat exchanger 211 and an outdoor heat exchanger 212 in the refrigerant circuit 210. Further, the first compression mechanism 221 is coupled to a motor 222 and an expansion mechanism 223 by a shaft, and the second compression mechanism 231 is coupled to the motor 232 by a shaft.

The controller 250 controls the second compressor 230 so that the high pressure of the refrigeration cycle should be a certain target value. Specifically, the controller 250 reduces the rotation frequency of the motor 232 if the measured value of a high pressure Ph exceeds the target value, thereby reducing the discharge amount from the second compression mechanism 231. On the other hand, the controller 250 increases the rotational speed of the motor 232 if the measured value of the high pressure Ph falls below the target value, thereby increasing the discharge amount from the second compression mechanism 231. Thus, it is possible to maintain the high pressure Ph close to the target value, which makes it possible to operate the refrigeration cycle apparatus while keeping a high COP.

Meanwhile, when the operation of the refrigeration cycle apparatus is stopped, a large counter voltage might be generated in the driving circuit of the motor by suddenly stopping the motor. In order to prevent this, it can be employed, for example, to perform a stop operation in which the rotation frequency of the motor is reduced gradually, taking a certain time, and then the motor is completely stopped after the rotation frequency has been reduced to some extent, as disclosed in Patent Literature 2.

### CITATION LIST

### Patent Literatures

Patent Literature 1: JP 2004-212006 A
Patent Literature 2: JP 58(1983)-99635 A

### SUMMARY OF INVENTION

### Technical Problem

However, if the rotation frequencies of both motors 222 and 232 are reduced at the same reduction speed in the refrigeration cycle apparatus using the expander-compressor unit 220 and the second compressor 230 as shown in Fig. 13, the displacement of the expansion mechanism 223 gradually becomes insufficient, and therefore the high pressure of the refrigeration cycle progressively shifts away from the optimal pressure (the pressure at which the COP is highest) that is defined corresponding to the low pressure thereof. Accordingly, the pressure difference between the high pressure and the low pressure in the refrigeration cycle is rendered difficult to be reduced, and thus a large energy is required to perform the stop operation. Here, it also is conceivable to control the high pressure to be maintained at the optimal high pressure by measuring the high pressure. However, it is very difficult to perform such control in the stop operation that is an unsteady operation.

In view of such circumstances, it is an object of the present invention to achieve energy saving in the stop operation in a refrigeration cycle apparatus using an expander-compressor unit and a second compressor.

### Solution to Problem

In order to achieve the above-mentioned object, the present invention provides a refrigeration cycle apparatus provided with: a first compressor including a first compression mechanism for compressing a refrigerant, an expansion mechanism for recovering power from the refrigerant that is expanding, and a first motor coupled to the first compression mechanism and the expansion mechanism by a shaft; a second compressor including a second compression mechanism, connected in parallel to the first compression mechanism in a refrigerant circuit, for compressing the refrigerant, and a second motor coupled to the second compression mechanism by a shaft; a radiator for radiating heat of the refrigerant discharged from the first compression mechanism and the second compression mechanism; an evaporator for evaporating the refrigerant discharged from the expansion mechanism; and a control device for reducing the rotation frequency of the second motor at a reduction speed greater than the rotation frequency of the first motor in a stop operation for stopping the first motor and the second motor while reducing the rotation frequencies of the first motor and the second motor.

### Advantageous Effects of Invention

According to the above-mentioned configuration, the gradual insufficiency of the displacement of the expansion mechanism can be compensated for by setting the reduction speed for the rotation frequency of the second motor greater than the reduction speed for the rotation frequency of the first motor. Therefore, according to the present invention, the pressure difference between the high pressure and the low pressure in the refrigeration cycle can be reduced rapidly, and thus energy saving can be achieved in the stop operation.

### BRIEF DESCRIPTION OF DRAWINGS

Fig. 1 is a schematic diagram showing the configuration of a refrigeration cycle apparatus according to the first embodiment of the present invention.
Fig. 2 is a Mollier diagram showing a refrigeration cycle in a stop operation in the first embodiment.
Fig. 3 is a graph showing the relationship between the time and the rotation frequency of each of first and second motors in the stop operation in the first embodiment.
Fig. 4 is a flow chart showing the stop operation in the first embodiment.
Fig. 5 is a schematic diagram showing the configuration of a refrigeration cycle apparatus according to the second embodiment of the present invention.
Fig. 6 is a flow chart showing a stop operation in the second embodiment.
Fig. 7 is a graph showing the relationship between the time and the rotation frequency of each of first and second motors in a stop operation in the third embodiment of the present invention.
Fig. 8 is a flow chart showing the stop operation in the third embodiment.
Fig. 9 is a schematic diagram showing the configuration of a refrigeration cycle apparatus according to the fourth embodiment of the present invention.
Fig. 10 is a flow chart showing a stop operation in the fourth embodiment.
Fig. 11 is a flow chart showing a stop operation in the fifth embodiment of the present invention.
Fig. 12 is a flow chart showing a stop operation in the sixth embodiment of the present invention.
Fig. 13 is a schematic diagram showing the configuration of a conventional refrigeration cycle apparatus.

### DESCRIPTION OF EMBODIMENTS

Hereinafter, the embodiments of the present invention are described with reference to the drawings.

### First embodiment

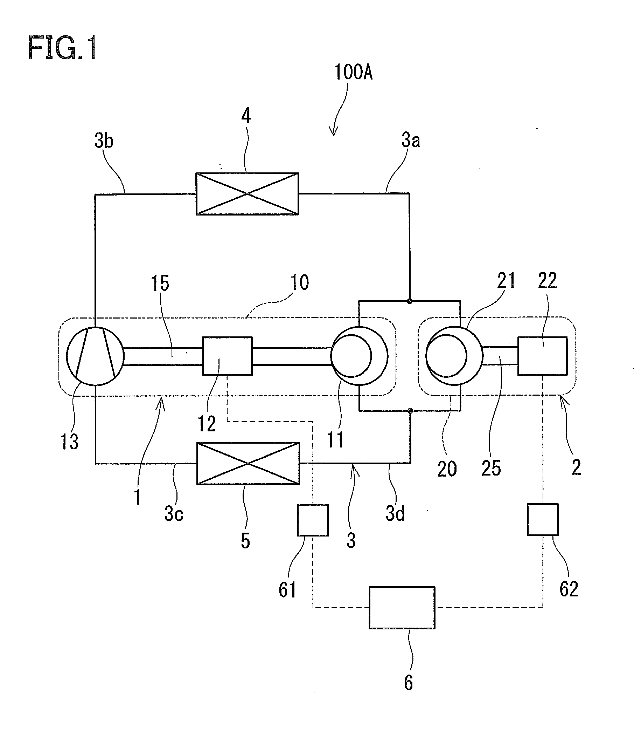

FIG. 1 shows a refrigeration cycle apparatus 100A according to the first embodiment of the present invention. This refrigeration cycle apparatus 100A is provided with a refrigerant circuit 3 that allows a refrigerant to circulate therein. The refrigerant circuit 3 is composed of a first compressor (expander-compressor unit) 1, a second compressor 2, a radiator 4, an evaporator 5, and first to fourth pipes 3a to 3d connecting these devices.

The first compressor 1 has a first closed casing 10 accommodating a first compression mechanism 11, a first motor 12, and an expansion mechanism 13 that are sequentially coupled to one another by a first shaft 15. The second compressor 2 has a second closed casing 20 accommodating a second compression mechanism 21 and a second motor 22 that are coupled to each other by a second shaft 25. The first compression mechanism 11 and the second compression mechanism 21 are connected to the radiator 4 via the first pipe 3a having two branch pipes that merge into one main pipe. The radiator 4 is connected to the expansion mechanism 13 via the second pipe 3b. The expansion mechanism 13 is connected to the evaporator 5 via the third pipe 3c. The evaporator 5 is connected to the first compression mechanism 11 and the second compression mechanism 21 via the fourth pipe 3d having one main pipe that is divided into two branch pipes. That is, the first compression mechanism 11 and the second compression mechanism 21 are arranged in parallel in the refrigerant circuit 3. In other words, the first compression mechanism 11 and the second compression mechanism 21 are connected in parallel in the refrigerant circuit 3.

The refrigerant compressed in the first compression mechanism 11 and the refrigerant compressed in the second compression mechanism 21 are discharged respectively from the first compression mechanism 11 and the second compression mechanism 21 into the first pipe 3a, and then merged, while flowing in the first pipe 3a, to be introduced to the radiator 4. The refrigerants compressed in the compression mechanisms 11 and 12 may be discharged from the compression mechanisms 11 and 12 once into the closed casings 10 and 20, and then exhausted from the closed casings 10 and 20 into the first pipe 3a. The refrigerant introduced to the radiator 4 radiates heat in the radiator 4, and then introduced to the expansion mechanism 13 through the second pipe 3b. The refrigerant introduced to the expansion mechanism 13 expands in the expansion mechanism 13. At this time, the expansion mechanism 13 recovers power from the refrigerant that is expanding. The refrigerant that has expanded is discharged from the expansion mechanism 13 into the third pipe 3c, and introduced to the evaporator 5. The refrigerant introduced to the evaporator 5 absorbs heat in the evaporator 5, and then is diverged, while flowing in the fourth pipe 3d, to be introduced to the first compression mechanism 11 and the second compression mechanism 21.

It is preferable that the displacement of the first compression mechanism 11 is the same as that of the second compression mechanism 21. In this case, the same member can be used for constituting the first compression mechanism 11 and second compression mechanism 21, so that the cost can be reduced.

The refrigerant circuit 3 is filled with a refrigerant that reaches its supercritical state on the high pressure side (the part extending from the first compression mechanism 11 and the second compression mechanism 21 to the expansion mechanism 13 through the radiator 4). In this embodiment, the refrigerant circuit 3 is filled with carbon dioxide (CO₂) as such a refrigerant. It should be noted that the type of the refrigerant is not particularly limited. The refrigerant may be a refrigerant that does not reach its supercritical state during operation (such as fluorocarbon refrigerants).

Further, the refrigeration cycle apparatus 100Ais provided with a control device 6 that is equipped with a CPU and mainly controls the rotation frequencies of the first motor 12 and the second motor 22. The control device 6 is connected to the first motor 12 and the second motor 22, respectively, via inverters 61 and 62.

Upon receiving a stop signal in a continuous steady operation, for example, when a stop switch is actuated by a user, the control device 6 performs a stop operation in which the first motor 12 and the second motor 22 are stopped while the rotation frequencies of the first motor 12 and the second motor 22 are reduced.

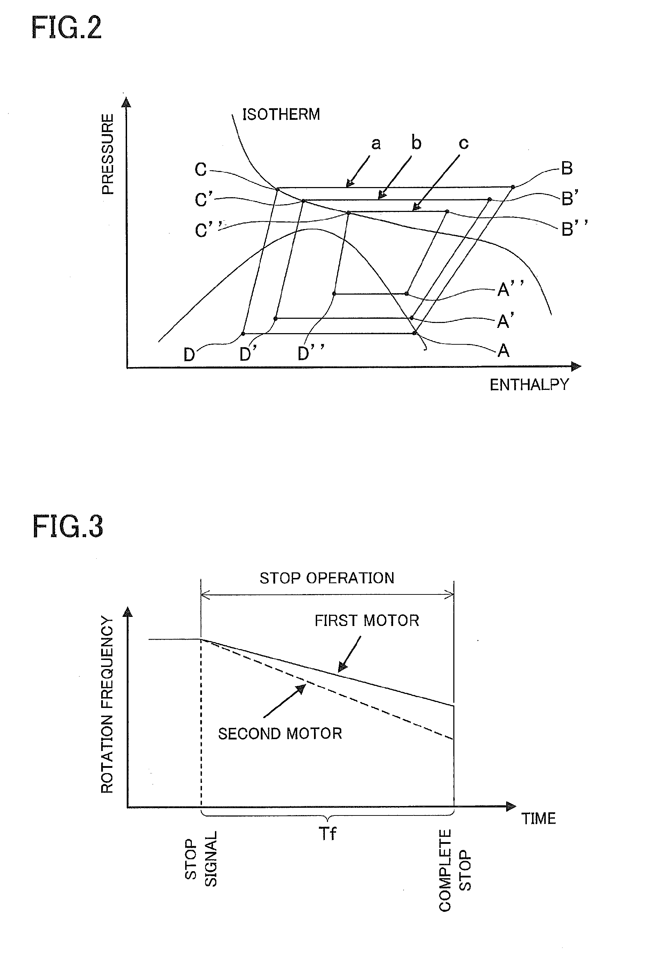

Fig. 2 is a Mollier diagram showing the refrigeration cycle in the stop operation in the first embodiment. In Fig. 2, a denotes the refrigeration cycle immediately after the start of the stop operation, b denotes the refrigeration cycle in the middle thereof, and c denotes the refrigeration cycle immediately before the end thereof. Also in Fig. 2, the points A, A', and A" indicate the state of the refrigerant flowing in the fourth pipe 3d (that is, the refrigerant to be drawn into the compression mechanisms), the points B, B', and B" indicate the state of the refrigerant flowing in the first pipe 3a (to be precise, in the main pipe of the first pipe 3a), the points C, C', and C" indicate the state of the refrigerant flowing in the second pipe 3b (that is, the refrigerant to be drawn into the expansion mechanism), and the points D, D', and D" indicate the state of the refrigerant flowing in the third pipe 3c. As shown in Fig. 2, the pressure difference between the high pressure and the low pressure in the refrigeration cycle changes to be reduced as the stop operation proceeds, and therefore the refrigeration cycle shows a change in appearance as if it were shrinking.

If the rotation frequency of the first motor 12 and the rotation frequency of the second motor 22 are reduced at the same reduction speed, the density ratio between the refrigerant to be drawn into the expansion mechanism and the refrigerant to be drawn into the compression mechanism decreases as the stop operation proceeds. Thus, the displacement of the expansion mechanism 13 gradually becomes insufficient. As a result, the pressure difference between the high pressure and the low pressure in the refrigeration cycle is rendered difficult to be reduced.

In contrast, in this embodiment, the control device 6 reduces the rotation frequency of the second motor 22 at a reduction speed greater than the rotation frequency of the first motor 12, as shown in Fig. 3. In this embodiment, a braking time Tf within which the first motor 12 and the second motor 22 are to be stopped is set in advance, and the braking time Tf is stored in the memory of the control device 6. The braking time Tf, for example, is one minute. Then, the control device 6 completely stops the first motor 12 and the second motor 22 simultaneously on the basis of the braking time Tf.

It should be noted that, although Fig. 3 illustrates a state where the rotation frequency of the first motor 12 and the rotation frequency of the second motor 22 in the steady operation are the same, for convenience of description, they are adjusted by the control device 5 to appropriate rotation frequencies so that the high pressure of the refrigeration cycle should be optimal.

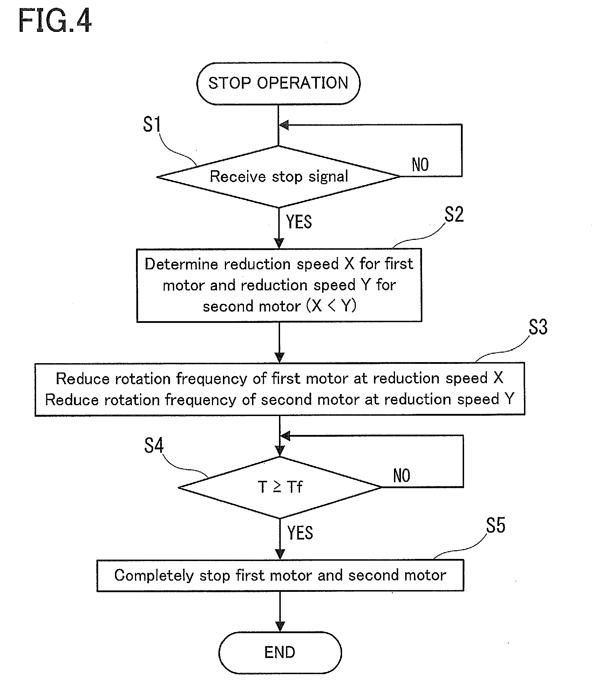

Hereinafter, the control of the stop operation by the control device 6 is described in detail with reference to the flow chart of Fig. 4.

First, the control device 6 waits to receive a stop signal (NO in step S1), and upon receiving a stop signal (YES in step S1), it determines a reduction speed X for the first motor and a reduction speed Y for the second motor (step S2). In this regard, the reduction speed Y is greater than the reduction speed X. For example, the reduction speed X for the first motor is 1 Hz/sec, and the reduction speed Y for the second motor is 2 Hz/sec.

Various methods can be employed to determine the reduction speeds X and Y For example, the following method can be employed. A table showing a correspondence between the rotation frequencies and the reduction speeds at the start of the stop operation is stored in the memory of the control device 6 in advance, and upon receiving a stop signal, the control device 6 reads the reduction speeds that correspond respectively to the rotation frequencies of the first motor 12 and the second motor 22 from the memory to determine the reduction speeds X and Y Alternatively, the following method can be employed. The reduction percentages for the rotation frequencies during the stop operation are set in advance, and the rotation frequencies at the time of the reception of the stop signal multiplied by the percentages are divided by the braking time Tf to determine the reduction speeds X and Y.

Subsequently, the control device 6 reduces the rotation frequency of the first motor 12 at the reduction speed X, and reduces the rotation frequency of the second motor 22 at the reduction speed Y Then, the control device 6 continues to reduce the rotation frequencies until the elapsed time T from the reception of the stop signal becomes equal to or more than the braking time Tf stored in the memory (NO in step S4). Once the elapsed time T has become equal to or more than the braking time Tf (YES in step S4), it completely stops the first motor 12 and the second motor 22 (step S5).

In the refrigeration cycle apparatus 100A described above, the gradual insufficiency of the displacement of the expansion mechanism 13 can be compensated for by setting the reduction speed Y for the rotation frequency of the second motor 12 greater than the reduction speed X for the rotation frequency of the first motor 12. Accordingly, the pressure difference between the high pressure and the low pressure in the refrigeration cycle can be reduced rapidly, and thus energy saving can be achieved in the stop operation.

Further in this embodiment, the first motor 12 and the second motor 22 are completely stopped on the basis of the braking time Tf that has been set in advance, and therefore the above-mentioned effects can be obtained with a simple and easy configuration.

For example, as shown in the following Table 1, under the condition of X = 1.0 Hz/sec and Y = 2.0Hz/sec, the pressure difference between the refrigerant to be drawn into the expansion mechanism and the refrigerant to be drawn into the compression mechanism can be reduced, when the density ratio thereof decreases.

**Table 1**

| Change in the state of the refrigerant in the stop operation (X = 1.0 Hz/sec, Y = 2.0 Hz/sec) | | | | | | | | |
|---|---|---|---|---|---|---|---|---|
| | Refrigerant to be drawn into expansion mechanism | | | Refrigerant to be drawn into compression mechanism | | | Pressure difference | Density ratio |
| | Pressure (Mpa) | Temperature (°C) | Density (kg/m³) | Pressure (Mpa) | Temperature (°C) | Density (kg/m³) | | |
| Immediately after the start | 12 | 40 | 717 | 3.5 | 1 | 97 | 8.5 | 7.39 |
| In the middle | 10 | 40 | 628 | 4.5 | 10 | 135 | 5.5 | 4.65 |
| Immediately before the end | 8 | 40 | 278 | 5.5 | 18.5 | 180 | 2.5 | 1.54 |

In contrast, as shown in the following Table 2, under the condition of X = Y = 2.0 Hz/sec, the pressure difference between the refrigerant to be drawn into the expansion mechanism and the refrigerant to be drawn into the compression mechanism cannot be reduced so much, when the density ratio thereof decreases.

**Table 2**

| Change in the state of the refrigerant in the stop operation (X = Y = 2.0 Hz/sec) | | | | | | | | |
|---|---|---|---|---|---|---|---|---|
| | Refrigerant to be drawn into expansion mechanism | | | Refrigerant to be drawn into compression mechanism | | | Pressure difference | Density ratio |
| | Pressure (Mpa) | Temperature (°C) | Density (kg/m³) | Pressure (Mpa) | Temperature (°C) | Density (kg/m³) | | |
| Immediately after the start | 12 | 40 | 717 | 3.5 | 1 | 97 | 8.5 | 7.39 |
| In the middle | 11.5 | 40 | 702 | 3.7 | 3 | 104 | 7.8 | 6.75 |
| Immediately before the end | 11.2 | 40 | 691 | 3.9 | 5 | 111 | 7.3 | 6.23 |

In order to reduce the pressure difference between the refrigerant to be drawn into the expansion mechanism and the refrigerant to be drawn into the compression mechanism more rapidly, the reduction speed Y is preferably at least 1.5 times the reduction speed X, more preferably at least 2.0 times the reduction speed X. In this case, it is possible to shorten the time to be taken for the stop operation, thus improving the reliability of the first compressor 1 and the second compressor 2. Further, in view of improving the stability of the temperature and the pressure in the refrigeration cycle apparatus, the reduction speed Y is preferably 2.5 Hz/sec or less, more preferably 2.0 Hz/sec or less.

### Second embodiment

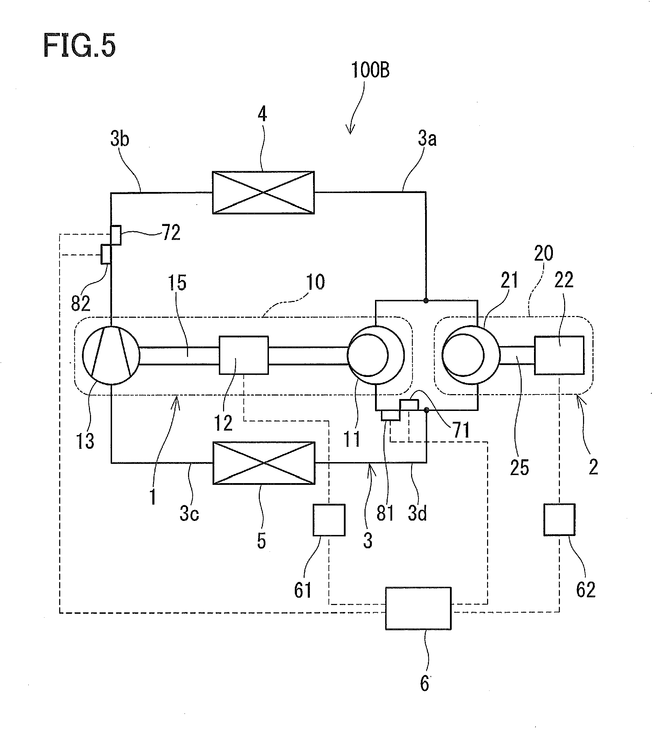

Next, Fig. 5 shows a refrigeration cycle apparatus 100B according to the second embodiment of the present invention. In this embodiment, the same components (including the steps in the flow chart) as those in the first embodiment are denoted by the same reference numerals, and the descriptions thereof are omitted. This can be applied similarly to the third to sixth embodiments to be described later.

The refrigeration cycle apparatus 100B of this embodiment is provided with a pre-expansion temperature sensor 82 for detecting the temperature of the refrigerant flowing in the second pipe 3b, a high pressure side pressure sensor 72 for detecting the pressure of the refrigerant flowing in the second pipe 3b, a pre-compression temperature sensor 81 for detecting the temperature of the refrigerant flowing in the fourth pipe 3d, and a low pressure side pressure sensor 71 for detecting the pressure of the refrigerant flowing in the fourth pipe 3d. In this embodiment, the high pressure side pressure sensor 72 is provided on the second pipe 3b, and the low pressure side pressure sensor 71 is provided on the branch pipe on the first compression mechanism 11 side of the fourth pipe 3d. However, the high pressure side pressure sensor 72 may be provided on the main pipe of the first pipe 3a, and the low pressure side pressure sensor 71 may be provided on the third pipe 3c, or the main pipe or the branch pipe on the second compression mechanism 21 side of the fourth pipe 3d.

The control device 6 calculates, upon receiving a stop signal, the density ratio between the refrigerant to be drawn into the expansion mechanism and the refrigerant to be drawn into the compression mechanism, from the temperature and the pressure detected by the pre-expansion temperature sensor 82 and the high pressure side pressure sensor 72, and the pre-compression temperature sensor 81 and the low pressure side temperature sensor 71. Then, the control device 6 determines the reduction speed X for the first motor and the reduction speed Y for the second motor from the calculated density ratio.

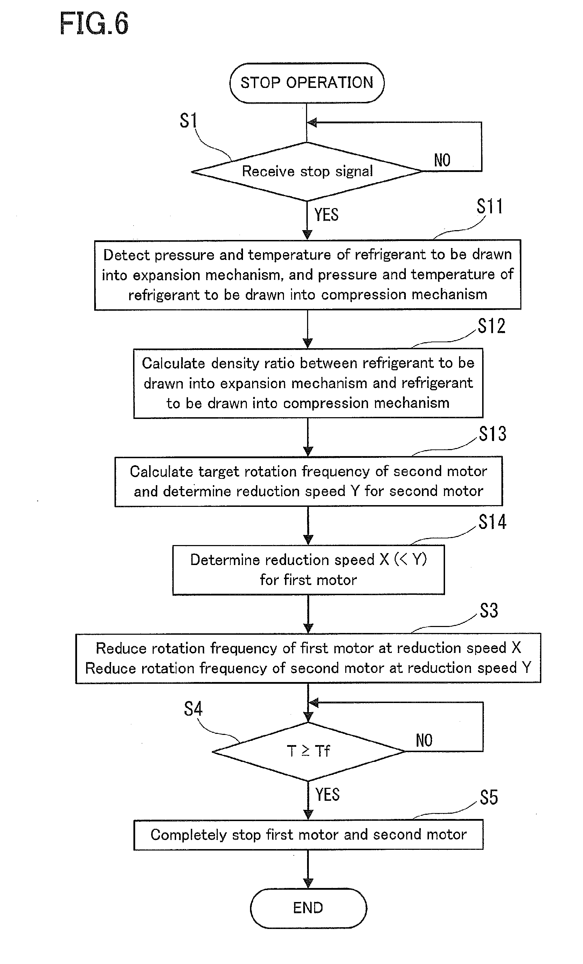

Specifically, as shown in Fig. 6, the control device 6 performs steps S11 to S14, instead of step S2 show in Fig. 4. That is, the control device 6 detects, upon receiving a stop signal (YES in step S1), the temperature and the pressure of the refrigerant to be drawn into the expansion mechanism, using the pre-expansion temperature sensor 82 and the high pressure side pressure sensor 72, and detects the temperature and the pressure of the refrigerant to be drawn into the compression mechanism, using the pre-compression temperature sensor 81 and the low pressure side temperature sensor 71 (step S11). Subsequently, the control device 6 calculates, from the temperature and the pressure detected above, the density ratio between the refrigerant to be drawn into the expansion mechanism and the refrigerant to be drawn into the compression mechanism (step S12).

Thereafter, the control device 6 calculates a target rotation frequency H for the second motor 22 on the basis of the density ratio calculated above, and determines the reduction speed Y for the second motor (step S13). Here, the target rotation frequency H is a rotation frequency to define the degree to which the rotation frequency of the second motor 22 should be reduced in the stop operation before the second motor 22 is completely stopped. For example, the target rotation frequency H may be found as follows. A value, for each specific density ratio, at which the pressure difference between the high pressure and the low pressure can be sufficiently reduced is stored beforehand in the control device 6, as shown in the following Table 3, and the value corresponding to the density ratio calculated in step S12 can be obtained from such data.

**Table 3**

| | | | | | |
|---|---|---|---|---|---|
| Density ratio | 7.0 | 6.0 | 5.0 | 4.0 | 3.0 |
| Target rotation frequency H [Hz] | 65 | 60 | 55 | 50 | 45 |

In this embodiment, the first motor 12 and the second motor 22 are completely stopped (step S4) after the braking time Tf has elapsed from the reception of the stop signal, in the same manner as in the first embodiment. Therefore, after the target rotation frequency H is calculated, the reduction speed Y is determined according to Y = (the rotation frequency at the time of the reception of the stop signal - H)/Tf.

After the reduction speed Y for the second motor is determined, the reduction speed X for the first motor is determined so as to be lower than the reduction speed Y (step S14). For example, the reduction speed X can be calculated by subtracting a speed difference that has been set in advance from the reduction speed Y

After determining the reduction speeds X and Y, the control device 6 performs steps S3 to S5 in the same manner as in the first embodiment.

As described above, in this embodiment, the density ratio between the refrigerant to be drawn into the expansion mechanism and the refrigerant to be drawn into the compression mechanism is calculated, and then the reduction speed X for the first motor and the reduction speed Y for the second motor are determined from the thus calculated density ratio. Therefore, an appropriate stop operation based on the density ratio in the steady operation can be performed, thus allowing further energy saving to be achieved.

In this embodiment, the reduction speed Y is determined using the target rotation frequency H for the second motor 22 (step S 13). However, for example, as are the cases of the fourth to sixth embodiments to be described later, if the first motor 12 and the second motor 22 are completely stopped without being based on the braking time Tf, the reduction speeds X and Y may be determined from the calculated density ratio, using the table showing the correspondence between the density ratio and the reduction speed.

### Third embodiment

Next, the third embodiment of the present invention is described. The refrigeration cycle apparatus of this embodiment has the same configuration as the refrigeration cycle apparatus 100A of the first embodiment shown in Fig. 1, and therefore the diagram showing the configuration thereof is omitted.

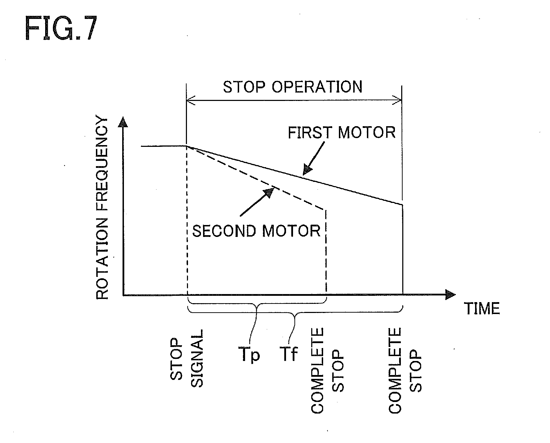

This embodiment differs from the first embodiment only in the control performed by the control device 6. Specifically, in this embodiment, the first braking time Tf within which the first motor 12 is to be stopped and the second braking time Tp within which the second motor 22 is to be stopped are set in advance, and these braking times Tf and Tp are stored in the memory of the control device 6. The second braking time Tp is set shorter than the first braking time Tf. The first braking time Tf, for example, is one minute, and the second braking time Tp, for example, is 30 seconds. Then, the control device 6 completely stops the second motor 22 prior to the first motor 12 on the basis of the braking times Tf and Tp, as shown in Fig. 7.

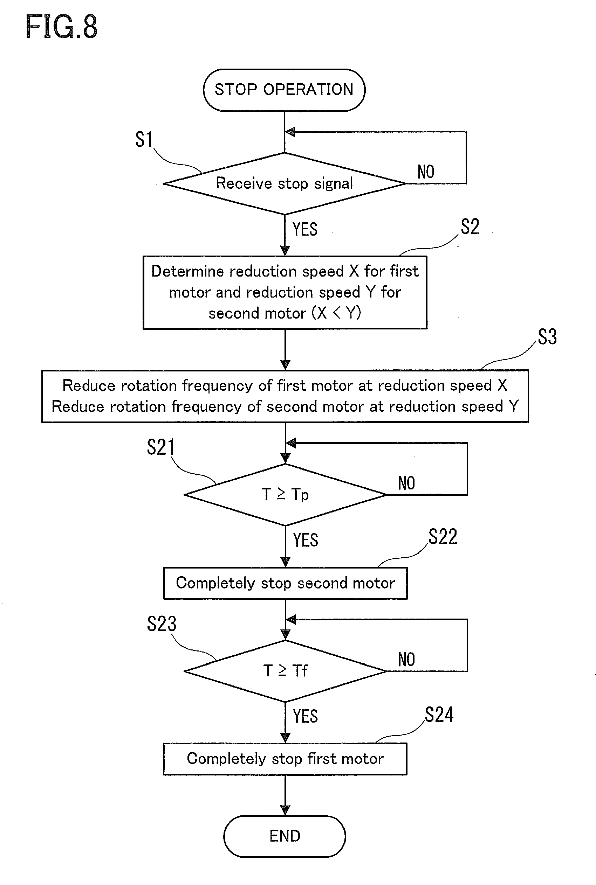

That is, as shown in Fig. 8, the control device 6 performs the same control as in the first embodiment up to step S3, and continues to reduce the rotation frequencies of the first motor 12 and the second motor 22 until the elapsed time T from the reception of the stop signal becomes equal to or more than the second braking time Tp stored in the memory (NO in step S21). Then, once the elapsed time T has become equal to or more than the second braking time Tp (YES in step S21), it completely stops the second motor 22 (step S22).

Thereafter, the control device 6 further continues to reduce the rotation frequency of the first motor 12 until the elapsed time T from the reception of the stop signal becomes equal to or more than the first braking time Tf stored in the memory (NO in step S23). Once the elapsed time T has become equal to or more than the first braking time Tf (YES in step S23), it completely stops the first motor 12 (step S24).

In this way, the second motor 22 is completely stopped prior to the first motor 12, resulting in an improvement in the safety.

Further, when the temperature sensors 81 and 82, and the pressure sensors 71 and 72 are provided, as described in the second embodiment, it also is possible to calculate, from the temperature and the pressure detected by these sensors, the density ratio between the refrigerant to be drawn into the expansion mechanism and the refrigerant to be drawn into the compression mechanism so as to determine the reduction speed X for the first motor and the reduction speed Y for the second motor from the calculated density ratio. For example, in the case where steps S11 to S 14 shown in Fig. 6 are employed instead of step S2, the rotation frequency obtained by subtracting the target rotation frequency H from the rotation frequency at the time of the reception of the stop signal may be divided by the second braking time Tp so as to determine the reduction speed Y for the second motor.

### Fourth embodiment

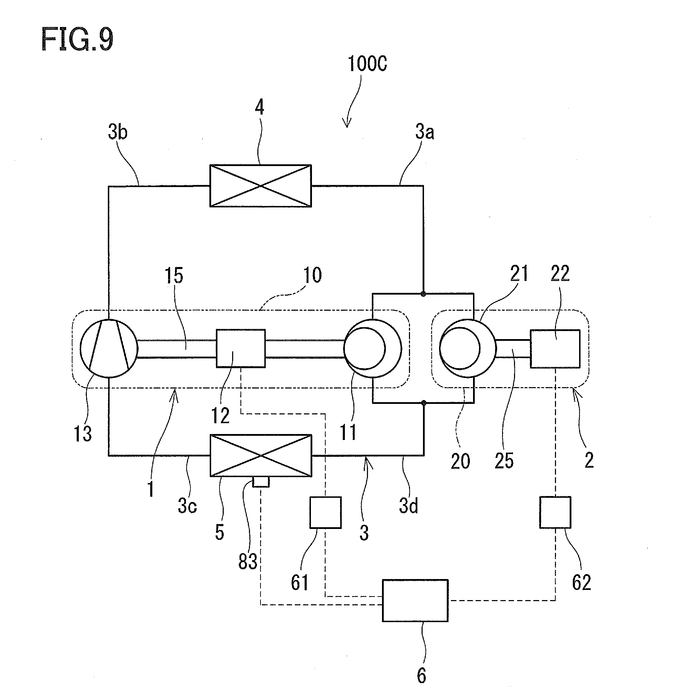

Next, Fig. 9 shows a refrigeration cycle apparatus 100C according to the fourth embodiment of the present invention. The refrigeration cycle apparatus 100B of this embodiment is provided with an evaporation temperature sensor 83 for detecting an evaporation temperature Te of the refrigerant in the evaporator 5. Then, the control device 6 completely stops the first motor 12 and the second motor 22 simultaneously on the basis of the evaporation temperature Te detected by the evaporation temperature sensor 83.

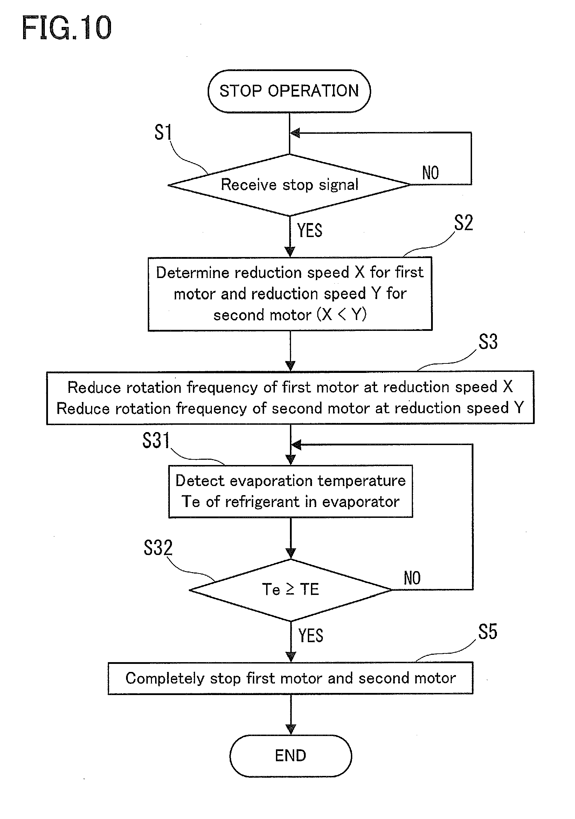

That is, as shown in Fig. 10, the control device 6 performs the same control as in the first embodiment up to step S3, and thereafter detects the evaporation temperature Te of the refrigerant in the evaporator 5, using the evaporation temperature sensor 83 (step S31). A set temperature TE is stored in the memory of the control device 6 in advance, and the control device 6 continues to reduce the rotation frequencies of the first motor 12 and the second motor 22 until the detected evaporation temperature Te becomes equal to or more than the set temperature TE (NO in step S32). Then, once the detected evaporation temperature Te has become equal to or more than the set temperature TE (YES in step S32), it completely stops the first motor 12 and the second motor 22 (step S5).

In this way, the low pressure of the refrigeration cycle can be predicted from the evaporation temperature Te, and therefore the first motor 12 and the second motor 22 can be stopped after the pressure difference between the refrigerant to be drawn into the expansion mechanism and the refrigerant to be drawn into the compression mechanism has been reduced for sure. This allows the reliability of the first compressor 1 and the second compressor 2 to be improved.

Further, when the temperature sensors 81 and 82, and the pressure sensors 71 and 72 are provided, as described in the second embodiment, it also is possible to calculate, from the temperature and the pressure detected by these sensors, the density ratio between the refrigerant to be drawn into the expansion mechanism and the refrigerant to be drawn into the compression mechanism so as to determine the reduction speed X for the first motor and the reduction speed Y for the second motor from the calculated density ratio.

Furthermore, it also is possible to completely stop the second motor 22 prior to the first motor 12, in the same manner as in the third embodiment, by preparing two kinds of the set temperature TE, which is the condition to determine the complete stop.

### Fifth embodiment

Next, the fifth embodiment of the present invention is described. The refrigeration cycle apparatus of this embodiment has the configuration in which the high pressure side pressure sensor 72 shown in Fig. 5 is added to the refrigeration cycle apparatus 100A of the first embodiment shown in Fig. 1, and therefore the diagram showing the configuration thereof is omitted. Then, the control device 6 completely stops the first motor 12 and the second motor 22 simultaneously on the basis of the pressure Pd detected by the high pressure side pressure sensor 72.

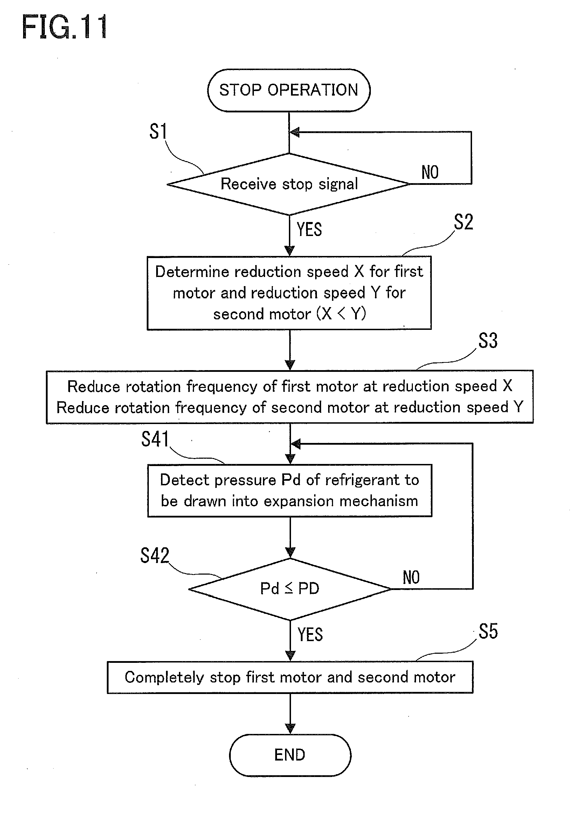

That is, as shown in Fig. 11, the control device 6 performs the same control as in the first embodiment up to step S3, and thereafter detects the pressure Pd of the refrigerant to be drawn into the expansion mechanism, using the high pressure side pressure sensor 72 (step S41). A set pressure PD is stored in the memory of the control device 6 in advance, and the control device 6 continues to reduce the rotation frequencies of the first motor 12 and the second motor 22 until the detected the pressure Pd becomes equal to or less than the set pressure PD (NO in step S42). Then, once the detected the pressure Pd has become equal to or less than the set pressure PD (YES in step S42), it completely stops the first motor 12 and the second motor 22 (step S5).

In this way, the first motor 12 and the second motor 22 can be stopped after the pressure difference between the refrigerant to be drawn into the expansion mechanism and the refrigerant to be drawn into the compression mechanism has been reduced for sure. This allows the reliability of the first compressor 1 and the second compressor 2 to be improved.

Further, when the temperature sensors 81 and 82, and the low pressure side pressure sensor 71 in addition to the high pressure side pressure sensor 72 are provided, as described in the second embodiment, it also is possible to calculate, from the temperature and the pressure detected by these sensors, the density ratio between the refrigerant to be drawn into the expansion mechanism and the refrigerant to be drawn into the compression mechanism so as to determine the reduction speed X for the first motor and the reduction speed Y for the second motor from the calculated density ratio.

Furthermore, it also is possible to completely stop the second motor 22 prior to the first motor 12, in the same manner as in the third embodiment, by preparing two kinds of the set pressure PD, which is the condition to determine the complete stop.

### Sixth embodiment

Next, the fifth embodiment of the present invention is described. The refrigeration cycle apparatus of this embodiment has the configuration in which the pre-compression temperature sensor 81 shown in Fig. 5 is added to the refrigeration cycle apparatus 100C of the fourth embodiment shown in Fig. 9, and therefore the diagram showing the configuration thereof is omitted. Then, the control device 6 completely stops the first motor 12 and the second motor 22 simultaneously on the basis of the temperature difference ΔT between the temperature Ts detected by the pre-compression temperature sensor 81 and the temperature Te detected by the evaporation temperature sensor 83, that is, superheat degree.

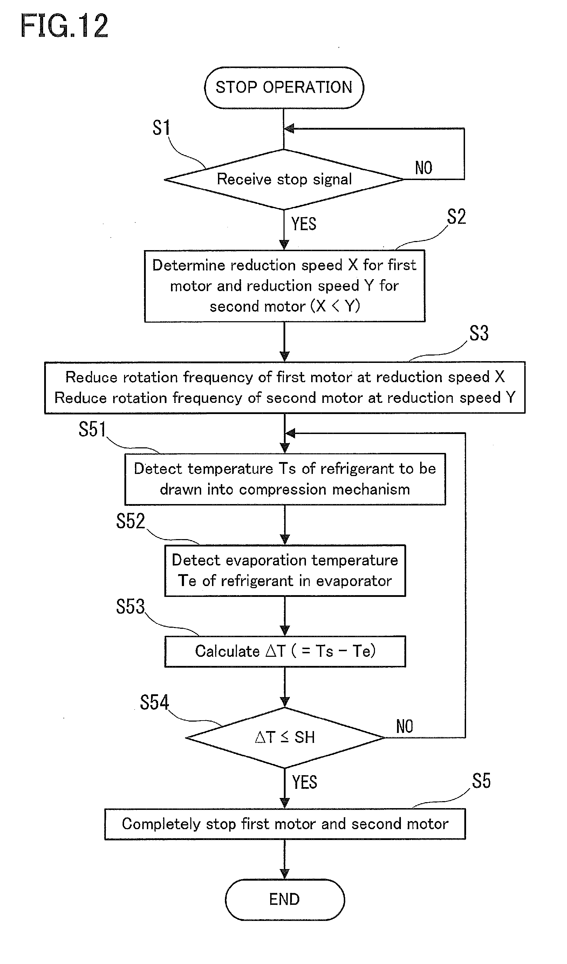

That is, as shown in Fig. 12, the control device 6 performs the same control as in the first embodiment up to step S3, and thereafter detects the temperature Ts of the refrigerant to be drawn into the compression mechanism, using the pre-compression temperature sensor 81 (step S51), as well as detecting the evaporation temperature Te of the refrigerant in the evaporator 5, using the evaporation temperature sensor 83 (step S52). Subsequently, the control device 6 calculates the temperature difference ΔT according to ΔT = Ts - Te (step S53). A set superheat degree SH is stored in the memory of the control device 6 in advance, and the control device 6 continues to reduce the rotation frequencies of the first motor 12 and the second motor 22 until the calculated temperature difference ΔT becomes equal to or less than the set superheat degree SH (NO in step S54). Then, once the calculated temperature difference ΔT has become equal to or less than the set superheat degree SH (YES in step S54), it completely stops the first motor 12 and the second motor 22 (step S5).

In this way, the first motor 12 and the second motor 22 can be stopped before liquid compression is performed in the first compression mechanism 11. This allows the reliability of the first compressor 1 and the second compressor 2 to be improved.

Further, when the pressure sensors 71 and 72, and the pre-expansion temperature sensor 82 in addition to the pre-compression temperature sensor 81 are provided, as described in the second embodiment, it also is possible to calculate, from the temperature and the pressure detected by these sensors, the density ratio between the refrigerant to be drawn into the expansion mechanism and the refrigerant to be drawn into the compression mechanism so as to determine the reduction speed X for the first motor and the reduction speed Y for the second motor from the calculated density ratio.

Furthermore, it also is possible to completely stop the second motor 22 prior to the first motor 12, in the same manner as in the third embodiment, by preparing two kinds of the set superheat degree SH, which is the condition to determine the complete stop.

### INDUSTRIAL APPLICABILITY

The refrigeration cycle apparatus of the present invention can be used for various applications such as bathroom drying and snow melting.

## Claims

1. A refrigeration cycle apparatus comprising:
a first compressor including a first compression mechanism for compressing a refrigerant, an expansion mechanism for recovering power from the refrigerant that is expanding, and a first motor coupled to the first compression mechanism and the expansion mechanism by a shaft;
a second compressor including a second compression mechanism for compressing the refrigerant, the second compression mechanism being connected in parallel to the first compression mechanism in a refrigerant circuit, and a second motor coupled to the second compression mechanism by a shaft;
a radiator for radiating heat of the refrigerant discharged from the first compression mechanism and the second compression mechanism;
an evaporator for evaporating the refrigerant discharged from the expansion mechanism; and
a control device for reducing a rotation frequency of the second motor at a reduction speed greater than a rotation frequency of the first motor in a stop operation for stopping the first motor and the second motor while reducing the rotation frequencies of the first motor and the second motor.

2. The refrigeration cycle apparatus according to claim 1, wherein
the control device determines, upon receiving a stop signal, a reduction speed for the first motor and a reduction speed for the second motor, and reduces the rotation frequency of the first motor and the rotation frequency of the second motor at the determined reduction speeds.

3. The refrigeration cycle apparatus according to claim 2, further comprising:
a first pipe for introducing the refrigerant from the first compression mechanism and the second compression mechanism to the radiator;
a second pipe for introducing the refrigerant from the radiator to the expansion mechanism;
a third pipe for introducing the refrigerant from the expansion mechanism to the evaporator; and
a fourth pipe for introducing the refrigerant from the evaporator to the first compression mechanism and the second compression mechanism.

4. The refrigeration cycle apparatus according to claim 3, further comprising:
a pre-expansion temperature sensor for detecting a temperature of the refrigerant flowing in the second pipe;
a high pressure side pressure sensor for detecting a pressure of the refrigerant flowing in the second pipe or the first pipe;
a pre-compression temperature sensor for detecting a temperature of the refrigerant flowing in the fourth pipe; and
a low pressure side pressure sensor for detecting a pressure of the refrigerant flowing in the fourth pipe or the third pipe, wherein
the control device calculates, upon receiving a stop signal, a density ratio between the refrigerant flowing in the second pipe and the refrigerant flowing in the fourth pipe, from the temperature and the pressure detected by the pre-expansion temperature sensor and the high pressure side pressure sensor, and the pre-compression temperature sensor and the low pressure side pressure sensor, so as to determine a reduction speed for the first motor and a reduction speed for the second motor from the calculated density ratio.

5. The refrigeration cycle apparatus according to any one of claims 1 to 4, wherein
the control device completely stops the first motor and the second motor on the basis of a braking time that has been set in advance.

6. The refrigeration cycle apparatus according to any one of claims 1 to 4, further comprising:
an evaporation temperature sensor for detecting an evaporation temperature of the refrigerant in the evaporator, wherein
the control device completely stops the first motor and the second motor on the basis of the evaporation temperature detected by the evaporation temperature sensor.

7. The refrigeration cycle apparatus according to claim 3, further comprising:
a high pressure side pressure sensor for detecting a pressure of the refrigerant flowing in the first pipe or the second pipe, wherein
the control device completely stops the first motor and the second motor on the basis of the pressure detected by the high pressure side pressure sensor.

8. The refrigeration cycle apparatus according to claim 4, wherein
the control device completely stops the first motor and the second motor on the basis of the pressure detected by the high pressure side pressure sensor.

9. The refrigeration cycle apparatus according to claim 3, further comprising:
a pre-compression temperature sensor for detecting a temperature of the refrigerant flowing in the fourth pipe; and
an evaporation temperature sensor for detecting an evaporation temperature of the refrigerant in the evaporator, wherein
the control device completely stops the first motor and the second motor on the basis of a temperature difference between the temperature detected by the pre-compression temperature sensor and the temperature detected by the evaporation temperature sensor.

10. The refrigeration cycle apparatus according to claim 4, further comprising:
an evaporation temperature sensor for detecting an evaporation temperature of the refrigerant in the evaporator, wherein
the control device completely stops the first motor and the second motor on the basis of a temperature difference between the temperature detected by the pre-compression temperature sensor and the temperature detected by the evaporation temperature sensor.

11. The refrigeration cycle apparatus according to any one of claims 5 to 10, wherein
the control device completely stops the first motor and the second motor simultaneously.

12. The refrigeration cycle apparatus according to any one of claims 5 to 10, wherein
the control device completely stops the second motor prior to the first motor.
